(19) Europäisches Patentamt
European Patent Office
Office européen des brevets

(11) **EP 3 521 265 B1**

(12) **EUROPEAN PATENT SPECIFICATION**

(45) Date of publication and mention
of the grant of the patent:
**23.11.2022 Bulletin 2022/47**

(21) Application number: **19155021.9**

(22) Date of filing: **01.02.2019**

(51) International Patent Classification (IPC):
**C04B 41/89** *(2006.01)*    **F16D 69/02** *(2006.01)*

(52) Cooperative Patent Classification (CPC):
(C-Sets available)
**C04B 41/89; C04B 41/009; C04B 41/52;
F16D 69/023;** C04B 2111/00362     (Cont.)

(54) **HIGH TEMPERATURE OXIDATION PROTECTION FOR COMPOSITES**

HOCHTEMPERATUROXIDATIONSSCHUTZ FÜR VERBUNDSTOFFE

PROTECTION CONTRE L'OXYDATION À HAUTE TEMPÉRATURE POUR DES COMPOSITES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.02.2018 US 201815886671**

(43) Date of publication of application:
**07.08.2019 Bulletin 2019/32**

(73) Proprietor: **Goodrich Corporation
Charlotte, NC 28217-4578 (US)**

(72) Inventors:
• **POTEET, Steven
06518, CT Connecticut Hamden (US)**
• **HOLOWCZAK, John E.
S. Windsor, CT Connecticut 06074 (US)**
• **LINCK, John
Pueblo, CO Colorado 81001 (US)**
• **WEAVER, John
Colorado Springs, CO Colorado (US)**

(74) Representative: **Dehns
St. Bride's House
10 Salisbury Square
London EC4Y 8JD (GB)**

(56) References cited:
**US-A1- 2017 369 714**

(52) Cooperative Patent Classification (CPC): (Cont.)

C-Sets
**C04B 41/009, C04B 35/83;**
**C04B 41/52, C04B 41/4539, C04B 41/5022;**
**C04B 41/52, C04B 41/5022, C04B 41/5092**

**Description**

**FIELD**

The present disclosure relates generally to composites and, more specifically, to oxidation protection systems for carbon-carbon composite structures.

**BACKGROUND**

Oxidation protection systems for carbon-carbon composites are typically designed to minimize loss of carbon material due to oxidation at operating conditions, which include temperatures of 900°C (1652°F) or higher. Phosphate-based oxidation protection systems may reduce infiltration of oxygen and oxidation catalysts into the composite structure. However, despite the use of such oxidation protection systems, significant oxidation of the carbon-carbon composites may still occur during operation of components such as, for example, aircraft braking systems. In addition, at such high operating temperatures, phosphate-based oxidation protection systems (OPS) applied to non-wear surfaces of brake disks may experience decreasing viscosity, which may cause the OPS to migrate away from non-wear surface edges proximate to a wear surface of the brake disk, leaving the composite material at or proximate to the non-wear surface edges vulnerable to oxidation. US 2017/0369714 A1 describes a method of protecting a part mode of a carbon-including material from oxidation.

**SUMMARY**

A method for forming an oxidation protection system, on a composite structure is provided. The method comprises forming a borosilicate glass slurry by combining a borosilicate glass with a carrier fluid; applying the borosilicate glass slurry to the composite structure; heating the composite structure to a temperature sufficient to form a borosilicate glass layer on the composite structure; forming a first slurry by combining a first pre-slurry composition with a first carrier fluid, wherein the first pre-slurry composition comprises a first phosphate glass composition; applying the first slurry to the composite structure; and/or heating the composite structure to a temperature sufficient to form a base layer on the composite structure. The oxidation protection system may comprise the borosilicate glass layer and the base layer. In various embodiments, applying the borosilicate glass slurry and heating the composite structure to form the borosilicate glass layer may occur before applying the first slurry and heating the composite structure to form the base layer. In various embodiments, applying the first slurry and heating the composite structure to form the base layer may occur before applying the borosilicate glass slurry and heating the composite structure to form the borosilicate glass layer.

In various embodiments, the method may further comprise forming a second slurry by combining a second pre-slurry composition with a second carrier fluid, wherein the second pre-slurry composition comprises a second phosphate glass composition; applying the second slurry to the composite structure; and heating the composite structure to a temperature sufficient to form a sealing layer on the composite structure. In various embodiments, the oxidation protection system may comprise the borosilicate glass layer, the base layer, and the sealing layer. In various embodiments, applying the borosilicate glass slurry and heating the composite structure to form the borosilicate glass layer may occur before applying the first slurry, heating the composite structure to form the base layer, applying the second slurry, and heating the composite structure to form the sealing layer. In various embodiments, applying the first slurry and heating the composite structure to form the base layer may occur before applying the borosilicate glass slurry, heating the composite structure to form the borosilicate glass layer, applying the second slurry, and heating the composite structure to form the sealing layer.

In various embodiments, the first pre-slurry composition may comprise a first acid aluminum phosphate wherein a first molar ratio of aluminum to phosphate is between 1 to 2 and 1 to 3. In various embodiments, the first molar ratio of aluminum to phosphate in the first acid aluminum phosphate may be between 1 to 2 and 1 to 2.7. In various embodiments, the borosilicate glass may comprise silicon dioxide, boron trioxide, sodium oxide, and/or aluminum oxide.

In various embodiments, the method may further comprise applying a pretreating composition, which may comprise applying a first pretreating composition to an outer surface of the composite structure before applying the borosilicate glass slurry, applying the first slurry, and/or applying the second slurry, wherein the first pretreating composition comprises aluminum oxide and water; heating the pretreating composition; and/or applying a second pretreating composition comprising at least one of a phosphoric acid or an acid phosphate salt, and an aluminum salt on the first pretreating composition, wherein the composite structure is porous and the second pretreating composition penetrates at least a portion of a plurality of pores of the composite structure.

In various embodiments, the first phosphate glass composition and/or the second phosphate glass composition may be represented by the formula $a(A'_2O)_x(P_2O_5)_{y1}b(G_fO)_{y2}c(A''O)_z$:

A' is selected from: lithium, sodium, potassium, rubidium, cesium, and mixtures thereof;

$G_f$ is selected from: boron, silicon, sulfur, germanium, arsenic, antimony, and mixtures thereof;

A" is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;

a is a number in the range from 1 to about 5;

b is a number in the range from 0 to about 10;

c is a number in the range from 0 to about 30;

x is a number in the range from about 0.050 to about 0.500;

$y_1$ is a number in the range from about 0.100 to about 0.950;

$y_2$ is a number in the range from 0 to about 0.20; and

z is a number in the range from about 0.01 to about 0.5;

$$(x + y_1 + y_2 + z) = 1;$$

and

$$x < (y_1 + y_2).$$

In various embodiments, an oxidation protection system disposed on an outer surface of a substrate may comprise a borosilicate glass layer comprising a borosilicate glass and a base layer comprising a first pre-slurry composition comprising a first phosphate glass composition. In various embodiments, the oxidation protection system may further comprise a sealing layer comprising a second pre-slurry composition comprising a second phosphate glass composition. In various embodiments, the borosilicate glass layer may be disposed adjacent to the outer surface of the substrate, the base layer may be disposed adjacent to the borosilicate glass layer, and the sealing layer may be disposed adjacent to the base layer such that the base layer is disposed between the borosilicate glass layer and the sealing layer. In various embodiments, the base layer may be disposed adjacent to the outer surface of the carbon-carbon composite structure, the borosilicate glass layer may be disposed adjacent to the base layer, and the sealing layer may be disposed adjacent to the borosilicate glass layer, such that the borosilicate glass layer is disposed between the base layer and the sealing layer. In various embodiments, the borosilicate glass may comprise silicon dioxide, boron trioxide, sodium oxide, and/or aluminum oxide. In various embodiments, the first pre-slurry composition may comprise a first acid aluminum phosphate wherein a first molar ratio of aluminum to phosphate is between 1 to 2 and 1 to 3.

In various embodiments, at least one of the first phosphate glass composition or the second phosphate glass composition may be represented by the formula $a(A'_2O)_x(P_2O_5)_{y1}b(G_fO)_{y2}c(A"O)_z$:

A' is selected from: lithium, sodium, potassium, rubidium, cesium, and mixtures thereof;

$G_f$ is selected from: boron, silicon, sulfur, germanium, arsenic, antimony, and mixtures thereof;

A" is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;

a is a number in the range from 1 to about 5;

b is a number in the range from 0 to about 10;

c is a number in the range from 0 to about 30;

x is a number in the range from about 0.050 to about 0.500;

$y_1$ is a number in the range from about 0.100 to about 0.950;

$y_2$ is a number in the range from 0 to about 0.20; and

z is a number in the range from about 0.01 to about 0.5;

$$(x + y_1 + y_2 + z) = 1;$$

and

$$x < (y_1 + y_2).$$

In various embodiments, a brake disk may comprise a carbon-carbon composite structure comprising a non-wear surface, and an oxidation protection system disposed on the non-wear surface. The oxidation protection system may comprise a borosilicate glass layer comprising a borosilicate glass disposed on the non-wear surface; a base layer comprising a first pre-slurry composition comprising a first phosphate glass composition disposed on the borosilicate glass layer; and a sealing layer comprising a second pre-slurry composition comprising a second phosphate glass composition disposed on the base layer.

## BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

FIG. 1A illustrates a cross sectional view of an aircraft wheel braking assembly, in accordance with various embodiments;
FIG. IB illustrates a partial side view of an aircraft wheel braking assembly, in accordance with various embodiments;
FIGS. 2A, 2B, and 2C illustrate methods for coating a composite structure, in accordance with various embodiments; and
FIG. 3 illustrates experimental data obtained from testing various oxidation protection systems, in accordance with various embodiments.

## DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical and mechanical changes may be made without departing from the scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option.

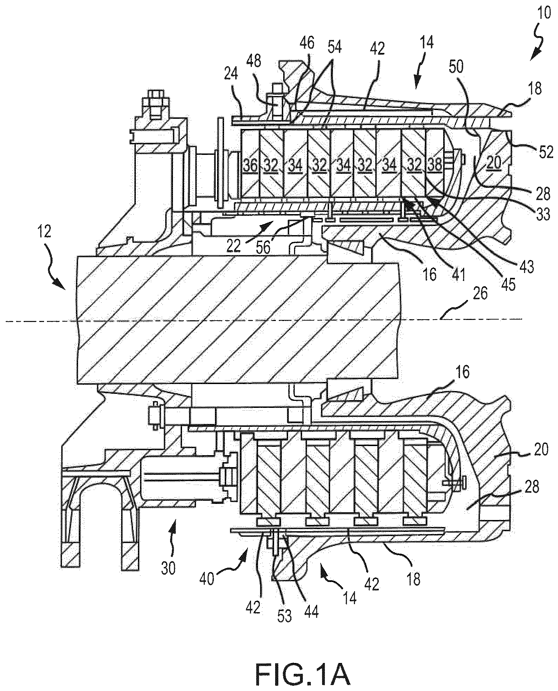

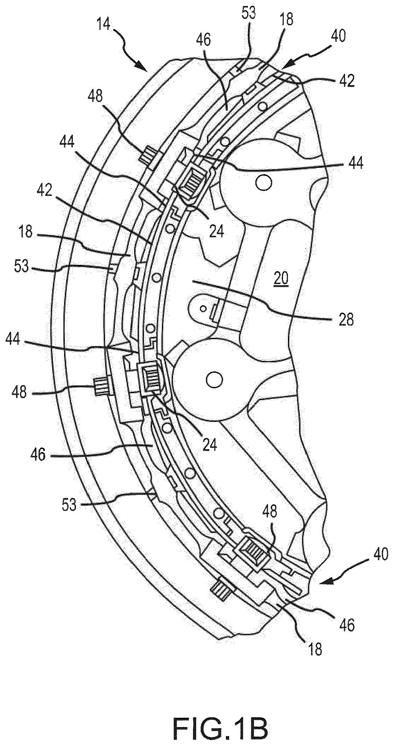

With initial reference to FIG. 1A and 1B, aircraft wheel braking assembly 10 such as may be found on an aircraft, in accordance with various embodiments is illustrated. Aircraft wheel braking assembly may, for example, comprise a bogie axle 12, a wheel 14 including a hub 16 and a wheel well 18, a web 20, a torque take-out assembly 22, one or more torque bars 24, a wheel rotational axis 26, a wheel well recess 28, an actuator 30, multiple brake rotors 32, multiple brake stators 34, a pressure plate 36, an end plate 38, a heat shield 40, multiple heat shield sections 42, multiple heat shield carriers 44, an air gap 46, multiple torque bar bolts 48, a torque bar pin 50, a wheel web hole 52, multiple heat shield fasteners 53, multiple rotor lugs 54, and multiple stator slots 56. FIG. IB illustrates a portion of aircraft wheel braking assembly 10 as viewed into wheel well 18 and wheel well recess 28.

In various embodiments, the various components of aircraft wheel braking assembly 10 may be subjected to the application of compositions and methods for protecting the components from oxidation.

Brake disks (e.g., interleaved rotors 32 and stators 34) are disposed in wheel well recess 28 of wheel well 18. Rotors 32 are secured to torque bars 24 for rotation with wheel 14, while stators 34 are engaged with torque take-out assembly 22. At least one actuator 30 is operable to compress interleaved rotors 32 and stators 34 for stopping the aircraft. In this example, actuator 30 is shown as a hydraulically actuated piston, but many types of actuators are suitable, such as an electromechanical actuator. Pressure plate 36 and end plate 38 are disposed at opposite ends of the interleaved rotors 32 and stators 34. Rotors 32 and stators 34 can comprise any material suitable for friction disks, including ceramics or carbon materials, such as a carbon/carbon composite.

Through compression of interleaved rotors 32 and stators 34 between pressure plates 36 and end plate 38, the resulting frictional contact slows rotation of wheel 14. Torque take-out assembly 22 is secured to a stationary portion of the landing gear truck such as a bogie beam or other landing gear strut, such that torque take-out assembly 22 and stators 34 are prevented from rotating during braking of the aircraft.

Carbon-carbon composites (also referred to herein as composite structures, composite substrates, and carbon-carbon composite structures, interchangeably) in the friction disks may operate as a heat sink to absorb large amounts of kinetic energy converted to heat during slowing of the aircraft. Heat shield 40 may reflect thermal energy away from wheel well 18 and back toward rotors 32 and stators 34. With reference to FIG. 1A, a portion of wheel well 18 and torque bar 24 is removed to better illustrate heat shield 40 and heat shield segments 42. With reference to FIG. 1B, heat shield 40 is attached to wheel 14 and is concentric with wheel well 18. Individual heat shield sections 42 may be secured in place between wheel well 18 and rotors 32 by respective heat shield carriers 44 fixed to wheel well 18. Air gap 46 is defined annularly between heat shield segments 42 and wheel well 18.

Torque bars 24 and heat shield carriers 44 can be secured to wheel 14 using bolts or other fasteners. Torque bar bolts 48 can extend through a hole formed in a flange or other mounting surface on wheel 14. Each torque bar 24 can optionally include at least one torque bar pin 50 at an end opposite torque bar bolts 48, such that torque bar pin 50 can be received through wheel web hole 52 in web 20. Heat shield sections 42 and respective heat shield carriers 44 can then be fastened to wheel well 18 by heat shield fasteners 53.

Under the operating conditions (e.g., high temperature) of aircraft wheel braking assembly 10, carbon-carbon composites may be prone to material loss from oxidation of the carbon. For example, various carbon-carbon composite components of aircraft wheel braking assembly 10 may experience both catalytic oxidation and inherent thermal oxidation caused by heating the composite during operation. In various embodiments, composite rotors 32 and stators 34 may be heated to sufficiently high temperatures that may oxidize the carbon surfaces exposed to air. At elevated temperatures, infiltration of air and contaminants may cause internal oxidation and weakening, especially in and around brake rotor lugs 54 or stator slots 56 securing the friction disks to the respective torque bar 24 and torque take-out assembly 22. Because carbon-carbon composite components of aircraft wheel braking assembly 10 may retain heat for a substantial time period after slowing the aircraft, oxygen from the ambient atmosphere may react with the carbon matrix and/or carbon fibers to accelerate material loss. Further, damage to brake components may be caused by the oxidation enlargement of cracks around fibers or enlargement of cracks in a reaction-formed porous barrier coating (e.g., a silicon-based barrier coating) applied to the carbon-carbon composite.

Elements identified in severely oxidized regions of carbon-carbon composite brake components include potassium (K) and sodium (Na). These alkali contaminants may come into contact with aircraft brakes as part of cleaning or de-icing materials. Other sources include salt deposits left from seawater or sea spray. These and other contaminants (e.g. Ca, Fe, etc.) can penetrate and leave deposits in pores of carbon-carbon composite aircraft brakes, including the substrate and any reaction-formed porous barrier coating. When such contamination occurs, the rate of carbon loss by oxidation can be increased by one to two orders of magnitude.

In various embodiments, components of aircraft wheel braking assembly 10 may reach operating temperatures in the range from about 100°C (212°F) up to about 900°C (1652°F), or higher (e.g., 1093°C (2000°F) on a wear surface of a brake disk). However, it will be recognized that the oxidation protection systems compositions and methods of the present disclosure may be readily adapted to many parts in this and other braking assemblies, as well as to other carbon-carbon composite structures susceptible to oxidation losses from infiltration of atmospheric oxygen and/or catalytic contaminants.

In various embodiments, a method for limiting an oxidation reaction in a substrate (e.g., a composite structure) may comprise forming an oxidation protection system on the composite structure. Forming the oxidation protection system may comprise forming a first slurry by combining a first pre-slurry composition comprising a first phosphate glass composition in the form of a glass frit, powder, or other suitable pulverized form, with a first carrier fluid (such as, for example, water), applying the first slurry to a composite structure, and heating the composite structure to a temperature sufficient to dry the carrier fluid and form an oxidation protection coating on the composite structure, which in various embodiments may be referred to a base layer. The first pre-slurry composition of the first slurry may comprise additives, such as, for example, ammonium hydroxide, ammonium dihydrogen phosphate, and/or nanoplatelets (such as graphene-based and/or boron nitride nanoplatelets), among others, to improve hydrolytic stability and/or to increase the composite structure's resistance to oxidation, thereby tending to reduce mass loss of composite structure. In various embodiments, a slurry (e.g., the first slurry) comprising acid aluminum phosphates having an aluminum (Al) to phosphoric acid ($H_3PO_4$) molar ratio of 1 to 3 or less, such as an $Al:H_3PO_4$ ratio of between 1 to 2 and 1 to 3, tends to provide increased hydrolytic stability without substantially increasing composite structure mass loss. In various embodiments, a slurry comprising acid aluminum phosphates having an $Al:H_3PO_4$ molar ratio between 1:2 to 1:3, or 1:2 to 1:2.7, produces an increase in hydrolytic protection and an unexpected reduction in composite structure mass loss.

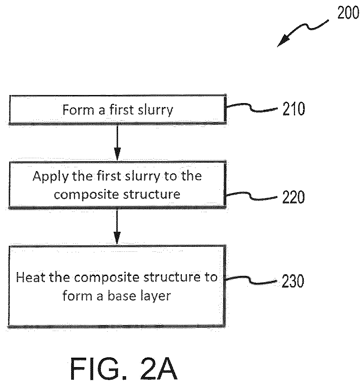

With initial reference to FIGS. 1A and 2A, a method 200 for coating a composite structure in accordance with various embodiments is illustrated. Method 200 may, for example, comprise applying an oxidation inhibiting composition to non-wearing surfaces of carbon-carbon composite brake components, such as non-wear surfaces 45 and/or lugs 54. Non-wear surface 45, as labeled in FIG. 1A, simply references an exemplary non-wear surface on a brake disk, but non-wear surfaces similar to non-wear surface 45 may be present on any brake disks (e.g., rotors 32, stators 34, pressure plate 36, end plate 38, or the like). In various embodiments, method 200 may be used on the back face of pressure plate 36 and/or end plate 38, an inner diameter (ID) surface of stators 34 including slots 56, as well as outer diameter (OD) surfaces of rotors 32 including lugs 54. The oxidation inhibiting composition of method 200 may be applied to preselected regions of a carbon-carbon composite structure that may be otherwise susceptible to oxidation. For example, aircraft brake disks may have the oxidation inhibiting composition applied on or proximate stator slots 56, rotor lugs 54, and/or non-wear surface 45.

In various embodiments, method 200 may comprise forming a first slurry (step 210) by combining a first pre-slurry composition, comprising a first phosphate glass composition in the form of a glass frit, powder, or other suitable pulverized and/or ground form, with a first carrier fluid (such as, for example, water). In various embodiments, the first pre-slurry composition may comprise an acid aluminum phosphate wherein the molar ratio of $Al:H_3PO_4$ may be between 1:2 to 1:3, between 1:2.2 to 1:3, between 1:2.5 to 1:3, between 1:2.7 to 1:3 or between 1:2.9 to 1:3. The first pre-slurry composition of the first slurry may further comprise a boron nitride additive. For example, a boron nitride (such as hexagonal boron nitride) may be added to the first phosphate glass composition such that the resulting first pre-slurry composition comprises between about 10 weight percent and about 25 or 30 weight percent of boron nitride, wherein the term "about" in this context only means plus or minus 2 weight percent. Further, the first pre-slurry composition may comprise between about 15 weight percent and 25 weight percent of boron nitride, wherein the term "about" in this context only means plus or minus 2 weight percent. Boron nitride may be prepared for addition to the first pre-slurry composition and/or first phosphate glass composition by, for example, ultrasonically exfoliating boron nitride in dimethylformamide (DMF), a solution of DMF and water, and/or 2-propanol solution. In various embodiments, the boron nitride additive may comprise a boron nitride that has been prepared for addition to the first pre-slurry composition and/or first phosphate glass composition by crushing or milling (e.g., ball milling) the boron nitride. The resulting boron nitride may be combined with the first phosphate glass composition glass frit.

The first phosphate glass composition may comprise and/or be combined with one or more alkali metal glass modifiers, one or more glass network modifiers and/or one or more additional glass formers. In various embodiments, boron oxide or a precursor may optionally be combined with the $P_2O_5$ mixture to form a borophosphate glass, which has improved self-healing properties at the operating temperatures typically seen in aircraft braking assemblies. In various embodiments, the phosphate glass and/or borophosphate glass may be characterized by the absence of an oxide of silicon. Further, the ratio of $P_2O_5$ to metal oxide in the fused glass may be in the range from about 0.25 to about 5 by weight.

Potential alkali metal glass modifiers may be selected from oxides of lithium, sodium, potassium, rubidium, cesium, and mixtures thereof. In various embodiments, the glass modifier may be an oxide of lithium, sodium, potassium, or mixtures thereof. These or other glass modifiers may function as fluxing agents. Additional glass formers can include oxides of boron, silicon, sulfur, germanium, arsenic, antimony, and mixtures thereof.

Suitable glass network modifiers include oxides of vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof.

The first phosphate glass composition may be prepared by combining the above ingredients and heating them to a fusion temperature. In various embodiments, depending on the particular combination of elements, the fusion temperature may be in the range from about 700° C (1292°F) to about 1500° C (2732°F). The resultant melt may then be cooled and pulverized and/or ground to form a glass frit or powder. In various embodiments, the first phosphate glass composition may be annealed to a rigid, friable state prior to being pulverized. Glass transition temperature ($T_g$), glass softening temperature ($T_s$) and glass melting temperature ($T_m$) may be increased by increasing refinement time and/or temperature. Before fusion, the first phosphate glass composition comprises from about 20 mol% to about 80 mol% of $P_2O_5$. In various embodiments, the first phosphate glass composition comprises from about 30 mol% to about 70 mol% $P_2O_5$, or precursor thereof. In various embodiments, the first phosphate glass composition comprises from about 40 to about 60 mol% of $P_2O_5$. In this context, the term "about" means plus or minus 5 mol%.

The first phosphate glass composition may comprise, or be combined with, from about 5 mol% to about 50 mol% of the alkali metal oxide. In various embodiments, the first phosphate glass composition may comprise, or be combined with, from about 10 mol% to about 40 mol% of the alkali metal oxide. Further, the first phosphate glass composition may comprise, or be combined with, from about 15 to about 30 mol% of the alkali metal oxide or one or more precursors thereof. In various embodiments, the first phosphate glass composition may comprise, or be combined with, from about 0.5 mol% to about 50 mol% of one or more of the above-indicated glass formers. The first phosphate glass composition may comprise, or be combined with, about 5 to about 20 mol% of one or more of the above-indicated glass formers. As used herein, mol% is defined as the number of moles of a constituent per the total moles of the solution.

In various embodiments, the first phosphate glass composition may comprise, or be combined with, from about 0.5 mol% to about 40 mol% of one or more of the above-indicated glass network modifiers. The first phosphate glass composition may comprise, or be combined with, from about 2.0 mol% to about 25 mol% of one or more of the above-indicated glass network modifiers.

In various embodiments, the first phosphate glass composition may represented by the formula:

$$a(A'_2O)_x(P_2O_5)_{y1}b(G_fO)_{y2}c(A''O)_z \, [1]$$

In Formula 1, A' is selected from: lithium, sodium, potassium, rubidium, cesium, and mixtures thereof; $G_f$ is selected from: boron, silicon, sulfur, germanium, arsenic, antimony, and mixtures thereof; A'' is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof; a is a number in the range from 1 to about 5; b is a number in the range from 0 to about 10; c is a number in the range from 0 to about 30; x is a number in the range from about 0.050 to about 0.500; $y_1$ is a number in the range from about 0.100 to about 0.950; $y_2$ is a number in the range from 0 to about 0.20; and z is a number in the range from about 0.01 to about 0.5; $(x + y_1 + y_2 + z)=1$; and $x < (y_1 + y_2)$. The first phosphate glass composition may be formulated to balance the reactivity, durability and flow of the resulting glass base layer for optimal performance.

In various embodiments, first phosphate glass composition in glass frit form may be combined with additional components to form the first pre-slurry composition. For example, crushed first phosphate glass composition in glass frit form may be combined with ammonium hydroxide, ammonium dihydrogen phosphate, nanoplatelets (such as graphene-based nanoplatelets or boron nitride nanoplatelets), aluminum orthophosphate, acid aluminum phosphate (in any of the molar ratios described herein), boron nitride, and/or other materials and/or substances. For example, graphene nanoplatelets could be added to the first phosphate glass composition in glass frit form. In various embodiments, the additional components may be combined and preprocessed before combining them with first phosphate glass composition in glass frit form. Other suitable additional components include, for example, surfactants such as, for example, an ethoxylated low-foam wetting agent and flow modifiers, such as, for example, polyvinyl alcohol, polyacrylate, or similar polymers. In various embodiments, other suitable additional components may include additives to enhance impact resistance and/or to toughen the base layer or coating, such as, for example, at least one of whiskers, nanofibers or nanotubes consisting of nitrides, carbides, carbon, graphite, quartz, silicates, aluminosilicates, phosphates, and the like. In various embodiments, additives to enhance impact resistance and/or to toughen the base layer or coating may include silicon carbide whiskers, carbon nanofibers, boron nitride nanotubes and similar materials known to those skilled in the art.

In various embodiments, method 200 further comprises applying the first slurry to a composite structure (step 220). Applying the first slurry may comprise, for example, spraying or brushing the first slurry to an outer surface of the composite structure. Any suitable manner of applying the first slurry to the composite structure is within the scope of the present disclosure. As referenced herein, the composite structure may refer to a carbon-carbon composite structure.

In various embodiments, method 200 may further comprise a step 230 of heating the composite structure to form a base layer of phosphate glass. The composite structure may be heated (e.g., dried or baked) at a temperature in the range from about 200°C (292°F) to about 1000°C (1832°F). In various embodiments, the composite structure is heated to a temperature in a range from about 600°C (1112°F) to about 1000° C (1832°F), or between about 200°C (292°F) to about 900°C (1652°F), or further, between about 400° C (752°F) to about 850°C (1562°F). Step 230 may, for example, comprise heating the composite structure for a period between about 0.5 hour and about 8 hours, wherein the term "about" in this context only means plus or minus 0.25 hours. The base layer may also be referred to as a coating.

In various embodiments, the composite structure may be heated to a first, lower temperature (for example, about 30°C (86°F) to about 400°C (752°F)) to bake or dry the base layer at a controlled depth. A second, higher temperature (for example, about 300°C (572°F) to about 1000°C (1832°F)) may then be used to form a deposit from the base layer within the pores of the composite structure. The duration of each heating step can be determined as a fraction of the overall heating time and can range from about 10% to about 50%, wherein the term "about" in this context only means plus or minus 5%. In various embodiments, the duration of the lower temperature heating step(s) can range from about 20% to about 40% of the overall heating time, wherein the term "about" in this context only means plus or minus 5%. The lower temperature step(s) may occupy a larger fraction of the overall heating time, for example, to provide relatively slow heating up to and through the first lower temperature. The exact heating profile will depend on a combination of the first temperature and desired depth of the drying portion.

Step 230 may be performed in an inert environment, such as under a blanket of inert gas or less reactive gas (e.g., nitrogen, argon, other noble gases and the like). For example, a composite structure may be pretreated or warmed prior to application of the first slurry to aid in the penetration of the first slurry. Step 230 may be for a period of about 2 hours at a temperature of about 600°C (1112°F) to about 800°C (1472°F), wherein the term "about" in this context only means plus or minus 10°C. The composite structure and the first slurry may then be dried or baked in a non-oxidizing, inert or less reactive atmosphere, e.g., noble gasses and/or nitrogen ($N_2$), to optimize the retention of the first pre-slurry composition of the first slurry and resulting base layer in the pores of the composite structure. This retention may, for example, be improved by heating the composite structure to about 200°C (392°F) and maintaining the temperature for about 1 hour before heating the carbon-carbon composite to a temperature in the range described above. The temperature rise may be controlled at a rate that removes water without boiling, and provides temperature uniformity throughout the composite structure.

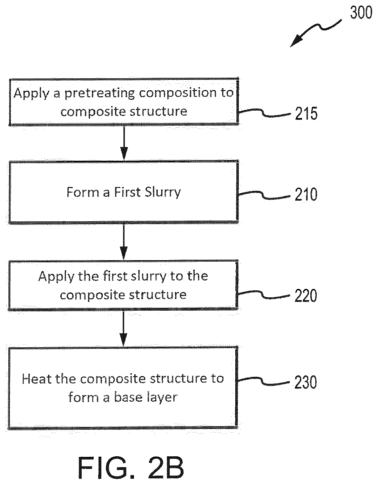

In various embodiments and with reference now to FIG. 2B, method 300, which comprises steps also found in method 200, may further comprise applying a pretreating composition (step 215) prior to applying the first slurry. Step 215 may, for example, comprise applying a first pretreating composition to an outer surface of a composite structure (e.g., a non-wear surface 45, as shown in FIG. 1), such as a component of aircraft wheel braking assembly 10. In various embodiments, the first pretreating composition may comprise an aluminum oxide in water. For example, the aluminum oxide may comprise an additive, such as a nanoparticle dispersion of aluminum oxide (for example, NanoBYK-3600®, sold by BYK Additives & Instruments). The first pretreating composition may further comprise a surfactant or a wetting agent. The composite structure may be porous, allowing the pretreating composition to penetrate at least a portion of the pores of the composite structure.

In various embodiments, after applying the first pretreating composition, the component may be heated to remove water and fix the aluminum oxide in place. For example, the component may be heated between about 100°C (212°F) and 200°C (392°F), and further, between 100°C (212°F) and 150°C (302°F).

Step 215 may further or alternatively comprise applying a second pretreating composition to the composite structure. In various embodiments, the second pretreating composition may comprise a phosphoric acid and an aluminum phosphate, aluminum hydroxide, and/or aluminum oxide. The second pretreating composition may further comprise, for example, a second metal salt such as a magnesium salt. In various embodiments, the aluminum to phosphorus molar ratio of the aluminum phosphate is 1 to 3. Further, the second pretreating composition may also comprise a surfactant or a wetting agent. In various embodiments, the second pretreating composition is applied directly to the composite structure and/or atop the first pretreating composition, if a first pretreating composition is applied. The composite structure may then, for example, be heated. In various embodiments, the composite structure may be heated between about 600°C (1112°F) and about 800°C (1472°F), and further, between about 650°C (1202°F) and 750°C (1382°F).

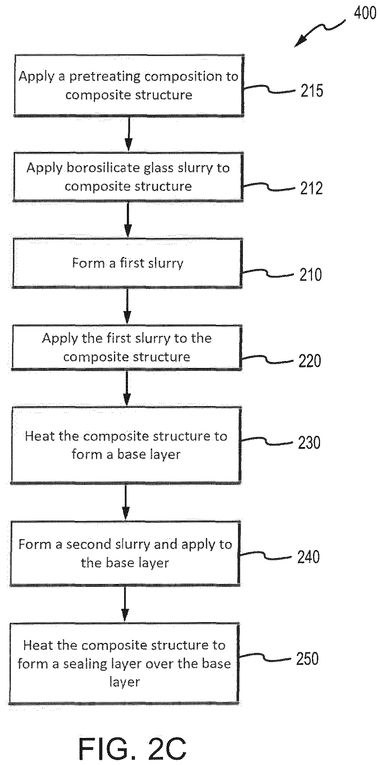

In various embodiments and with reference now to FIG. 2C, method 400 may further comprise a step 212 of applying a borosilicate glass slurry to the composite structure (step 212). The borosilicate glass slurry may comprise a borosilicate glass and a carrier fluid (e.g., water). In various embodiments, the borosilicate glass slurry may comprise from 10% to 60% by weight borosilicate glass, from 20% to 50% by weight borosilicate glass, and/or from about 30% to 40% by weight borosilicate glass. In various embodiments, the borosilicate glass slurry may comprise about 40% by weight borosilicate glass. In various embodiments, the borosilicate glass slurry may comprise about 60% by weight water. In various embodiments, the borosilicate glass slurry may comprise from 40% to 90% by weight water, from 50% to 80% by weight water, and/or from 60% to 70% by weight water. In various embodiments, the borosilicate glass slurry may comprise about 40% by weight borosilicate glass and 60% by weight water. In this context, "about" means plus or minus 5% by weight.

In various embodiments, the borosilicate glass comprised in the borosilicate glass slurry may comprise any suitable borosilicate glass and/or any suitable composition. In various embodiments, the borosilicate glass may comprise silicon dioxide ($SiO_2$), boron trioxide ($B_2O_3$), and/or aluminum oxide ($Al_2O_3$). In various embodiments, the borosilicate glass may comprise 65% to 85% by weight or 72% to 81% by weight $SiO_2$, 5% to 30% by weight or 12% to 25% by weight $B_2O_3$, and/or 0% to 5% by weight or 1% to 2.2% by weight $Al_2O_3$. In various embodiments, the borosilicate glass may additionally comprise sodium oxide ($Na_2O$). For example, the borosilicate glass may comprise about 80% by weight $SiO_2$ (wherein "about" means plus or minus 10% by weight), about 13% by weight $B_2O_3$ (wherein "about" means plus or minus 5% by weight), about 4% by weight $Na_2O$ (wherein "about" means plus or minus 1% by weight), and/or 2-3% by weight $Al_2O_3$. In various embodiments, the borosilicate glass may further comprise less than 1% by weight CaO, chlorine, MgO, and/or $Fe_2O_3$ (collectively or separately). For example, the borosilicate glass may comprise 80.6% by weight $SiO_2$, 12.6% by weight $B_2O_3$, 4.2% by weight $Na_2O$ , 2.2% by weight $Al_2O_3$, 0.1% by weight CaO, 0.1% by weight chlorine, 0.05% by weight MgO, and/or 0.04% by weight $Fe_2O_3$.

In various embodiments, the borosilicate glass may comprise about 70% by weight $SiO_2$ (wherein "about" means plus or minus 10% by weight), about 25% by weight $B_2O_3$ (wherein "about" means plus or minus 5% by weight), about 0.5% by weight $Na_2O$ (wherein "about" means plus or minus 0.3% by weight), and/or 0.5-2% by weight $Al_2O_3$. In various embodiments, the borosilicate glass may additionally comprise between 0.1% and 2% by weight potassium oxide ($K_2O$) and/or lithium oxide ($Li_2O$) (collectively or separately). For example, the borosilicate glass may comprise 72% by weight $SiO_2$, 25% by weight $B_2O_3$, 0.5% by weight $Na_2O$ , 1% by weight $Al_2O_3$, 0.5% by weight $Li_2O$, and/or 1% by weight $K_2O$. In various embodiments, the borosilicate glass may comprise a barium boron aluminosilicate glass.

In various embodiments, the borosilicate glass slurry may be formed (as part of step 212), by combining the borosilicate glass and the carrier fluid (e.g., water). In various embodiments, the borosilicate glass and/or borosilicate glass slurry may be pulverized, milled, and/or ground such that the borosilicate glass becomes a glass frit (e.g., by ball milling), for any suitable duration (e.g., 6-14 hours). The borosilicate glass slurry may be applied to the composite structure (e.g., a non-wear surface of a brake disk, such as non-wear surface 45 in FIG. 1) in any suitable manner (e.g., the application methods described in relation to step 220). The composite structure with the borosilicate glass slurry disposed thereon may be heated to remove the carrier fluid from the borosilicate glass slurry, forming a borosilicate glass layer comprising the borosilicate glass disposed on the composite structure.

In response to the borosilicate glass slurry being applied to the composite structure, and as part of step 212, the composite structure may be heated to form a borosilicate glass layer. In various embodiments, the composite structure may be heated similar to the heating described in step 230. In various embodiments, the composite structure may be heated between 800°C (1472°F) and 1200°C (2192°F), or between 900°C (1652°F) to 1000°C (1832°F), or above 1200°C (2192°F) for any suitable period of time (e.g., between about 1 to 8 hours, wherein "about" in this context means plus or minus 0.5 hour). In various embodiments, the heating of the composite structure to form the borosilicate glass layer may take place in an inert or unreactive environment (e.g., under nitrogen ($N_2$)).

In various embodiments, the borosilicate glass slurry may be applied and heated to form a borosilicate glass layer at any suitable point in method 400. For example, in various embodiments, the borosilicate glass slurry may be applied first to the composite structure such that the resulting borosilicate glass layer is adjacent to the composite structure. In various embodiments, the borosilicate glass slurry may be applied after the pretreating composition is applied to the composite structure (as discussed in step 215). In various embodiments, the borosilicate glass slurry may be applied before the first slurry is applied to the composite structure (as discussed in step 220), such that the borosilicate glass layer is disposed closer to the composite structure than the base layer resulting from the first slurry. In various embodiments, the borosilicate glass slurry may be applied after the first slurry is applied to the composite structure, such that the base layer is disposed closer to the composite structure than the borosilicate glass layer resulting from the borosilicate glass slurry.

In various embodiments and with reference now to FIG. 2C, method 400 may further comprise a step 240, similar to step 210, of forming a second slurry by combining a second pre-slurry composition, which may comprise a second phosphate glass composition in glass frit or powder form, with a second carrier fluid (such as, for example, water). In various embodiments, the second pre-slurry composition may further comprise ammonium dihydrogen phosphate (ADHP) and/or aluminum orthophosphate. Further, step 240 may comprise spraying or brushing the second slurry of the second phosphate glass composition on to an outer surface of the base layer or the borosilicate glass layer. Any suitable manner of applying the second slurry to the base layer is within the scope of the present disclosure (e.g., the application methods described in relation to step 220).

In various embodiments, the second slurry may be substantially free of boron nitride. In this case, "substantially free" means less than 0.01 percent by weight. In various embodiments, the second pre-slurry composition may comprise any of the components of the pre-slurry compositions described in connection with the first pre-slurry composition and/or first phosphate glass composition, without the addition of a boron nitride additive. In various embodiments, the second phosphate glass composition may comprise the same composition as that described in relation to the first phosphate glass composition (e.g., represented by formula 1). In various embodiments, the second pre-slurry mixture may comprise the same pre-slurry composition and/or phosphate glass composition used to prepare the first pre-slurry composition and/or the first phosphate glass composition. In various embodiments, the second pre-slurry composition may comprise a different pre-slurry composition and/or phosphate glass composition than the first pre-slurry composition and/or first phosphate glass composition.

In various embodiments, the first slurry and/or the second slurry may comprise an additional metal salt. The cation of the additional metal salt may be multivalent. The metal may be an alkaline earth metal or a transition metal. In various embodiments, the metal may be an alkali metal. The multivalent cation may be derived from a non-metallic element such as boron. The term "metal" is used herein to include multivalent elements such as boron that are technically non-metallic. The metal of the additional metal salt may be an alkaline earth metal such as calcium, magnesium, strontium, barium, or a mixture of two or more thereof. The metal for the additional metal salt may be iron, manganese, tin, zinc, or a mixture of two or more thereof. The anion for the additional metal salt may be an inorganic anion such as a phosphate, halide, sulfate or nitrate, or an organic anion such as acetate. In one embodiment, the additional metal salt may be an alkaline earth metal salt such as an alkaline earth metal phosphate. In one embodiment, the additional metal salt may be a magnesium salt such as magnesium phosphate. In one embodiment, the additional metal salt may be an alkaline earth metal nitrate, an alkaline earth metal halide, an alkaline earth metal sulfate, an alkaline earth metal acetate, or a mixture of two or more thereof. In one embodiment, the additional metal salt may be magnesium nitrate, magnesium halide, magnesium sulfate, or a mixture of two or more thereof. In one embodiment, the additional metal salt may comprise: (i) magnesium phosphate; and (ii) a magnesium nitrate, magnesium halide, magnesium sulfate, or a mixture of two or more thereof.

The additional metal salt may be selected with reference to its compatibility with other ingredients in the first slurry and/or the second slurry. Compatibility may include metal phosphates that do not precipitate, flocculate, agglomerate, react to form undesirable species, or settle out prior to application of the first slurry and/or the second slurry to the carbon-carbon composite. The phosphates may be monobasic ($H_2PO_4^-$), dibasic ($HPO_4^{-2}$), or tribasic ($PO_4^{-3}$). The phosphates may be hydrated. Examples of alkaline earth metal phosphates that may be used include calcium hydrogen phosphate (calcium phosphate, dibasic), calcium phosphate tribasic octahydrate, magnesium hydrogen phosphate (magnesium phosphate, dibasic), magnesium phosphate tribasic octahydrate, strontium hydrogen phosphate (strontium phosphate, dibasic), strontium phosphate tribasic octahydrate and barium phosphate.

In one embodiment, a chemical equivalent of the additional metal salt may be used as the additional metal salt. Chemical equivalents include compounds that yield an equivalent (in this instance, an equivalent of the additional metal salt) in response to an outside stimulus such as, temperature, hydration, or dehydration. For example, equivalents of alkaline earth metal phosphates may include alkaline earth metal pyrophosphates, hypophosphates, hypophosphites and orthophosphites. Equivalent compounds include magnesium and barium pyrophosphate, magnesium and barium orthophosphate, magnesium and barium hypophosphate, magnesium and barium hypophosphite, and magnesium and barium orthophosphite.

While not wishing to be bound by theory, it is believed that the addition of multivalent cations, such as alkaline earth metals, transition metals and nonmetallic elements such as boron, to the first slurry and/or the second slurry enhances the hydrolytic stability of the metal-phosphate network. In general, the hydrolytic stability of the metal-phosphate network increases as the metal content increases, however a change from one metallic element to another may influence oxidation inhibition to a greater extent than a variation in the metal-phosphate ratio. The solubility of the phosphate compounds may be influenced by the nature of the cation associated with the phosphate anion. For example, phosphates incorporating monovalent cations such as sodium orthophosphate or phosphoric acid (hydrogen cations) are very soluble in water while (tri)barium orthophosphate is insoluble. Phosphoric acids can be condensed to form networks but such compounds tend to remain hydrolytically unstable. Generally, it is believed that the multivalent cations link phosphate anions creating a phosphate network with reduced solubility. Another factor that may influence hydrolytic stability is the presence of -P-O-H groups in the condensed phosphate product formed from the first slurry and/or the second slurry during thermal treatment. The first slurry and/or the second slurry may be formulated to minimize concentration of these species and any subsequent hydrolytic instability. Whereas increasing the metal content may enhance the hydrolytic stability of the first slurry and/or the second slurry, it may be desirable to strike a balance between composition stability and effectiveness as an oxidation inhibitor.

In various embodiments, the additional metal salt may be present in the first slurry and/or the second slurry at a concentration in the range from about 0.5 weight percent to about 30 weight percent, and in various embodiments from about 0.5 weight percent to about 25 weight percent, and in various embodiments from about 5 weight percent to about 20 weight percent. In various embodiments, a combination of two or more additional metal salts may be present at a concentration in the range from about 10 weight percent to about 30 weight percent, and in various embodiments from about 12 weight percent to about 20 weight percent.

Method 400 may further comprise a step 250 of heating the composite structure to remove the carrier fluid from the second slurry, forming a sealing layer, which may comprise phosphate glass. The sealing layer may be formed over and/or adjacent to the base layer and/or the borosilicate glass layer. Similar to step 230, the composite structure may be heated at a temperature sufficient to adhere the sealing layer to the base layer by, for example, drying or baking the carbon-carbon composite structure at a temperature in the range from about 200°C (392°F) to about 1000°C (1832°F). In various embodiments, the composite structure is heated to a temperature in a range from about 600° C (1112°F) to about 1000°C (1832°F), or between about 200°C (392°F) to about 900°C (1652°F), or further, between about 400°C (752°F) to about 850° C (1562°F), wherein in this context only, the term "about" means plus or minus 10°C. Further, step 250 may, for example, comprise heating the composite structure for a period between about 0.5 hour and about 8 hours, where the term "about" in this context only means plus or minus 0.25 hours.

In various embodiments, step 250 may comprise heating the composite structure to a first, lower temperature (for example, about 30°C (86°F) to about 300°C (572°F)) followed by heating at a second, higher temperature (for example, about 300°C (572°F) to about 1000°C (1832°F)). Further, step 250 may be performed in an inert environment, such as under a blanket of inert or less reactive gas (e.g., nitrogen, argon, other noble gases, and the like). In various embodiments, a method for creating an oxidation protection system may not comprise steps 240 and 250, such that the oxidation protection system resulting from methods 200-400 may not comprise a sealing layer.

In summary, an oxidation protection system applied to a carbon-carbon composite structure comprises a borosilicate glass layer. It also comprises a base layer, and optionally a sealing layer. The order of the layers relative to the composite structure may be any suitable order. For example, in various embodiments, a borosilicate glass layer may be disposed on or adjacent to the composite structure (e.g., on an outer surface of the composite structure), the base layer may be disposed on or adjacent to the borosilicate glass layer, and the sealing layer may be disposed on or adjacent to the base layer such that the base layer is disposed between the borosilicate glass layer and the sealing layer. In various embodiments, the base layer may be disposed on or adjacent to the composite structure, the borosilicate glass layer may be disposed on or adjacent to the base layer, and the sealing layer may be disposed or adjacent to the borosilicate glass layer, such that the borosilicate glass layer is disposed between the base layer and the sealing layer. In various embodiments, the oxidation protection system may comprise the borosilicate glass layer and the base layer in any order relative to the composite structure, without a sealing layer. In various embodiments, there may be more than one borosilicate glass later in the oxidation protection system. In various embodiments, the borosilicate glass may chemically mix with the components of an adjacent base layer and/or sealing layer, and/or there may be a gradient between two layers in the oxidation protection system in which compounds of the adjacent layers have chemically mixed (e.g., as a result of heat treatment).

In various embodiments, as described herein, the oxidation protection system may further comprise a pretreatment composition, which may be disposed between the composite structure and the closest layer to the composite structure of the borosilicate glass layer, base layer, and/or the sealing layer.

In various embodiments, with additional reference to FIG. 1, the borosilicate glass layer formed by heating the borosilicate glass slurry (as discussed in step 212), may serve to prevent migration of the oxidation protection system from edges of a non-wear surface proximate and/or adjacent to a wear surface, such as edges 41, 43 of non-wear surface 45 adjacent to wear surface 33. Edges 41, 43 and wear surface 33, as labeled in FIG. 1A, simply reference exemplary edges and an exemplary wear surface, respectively, on a brake disk, but edges similar to edges 41, 43 and wear surfaces similar to wear surface 33 may be present on any brake disks (e.g., rotors 32, stators 34, pressure plate 36, end plate 38, or the like). Wear surfaces, such as wear surface 33, of brake disks may reach extremely high temperatures during operation (temperatures in excess of 1093°C (2000°F)). At such extreme temperatures of wear surfaces, the oxidation protection systems on non-wear surfaces adjacent to the wear surface (e.g., non-wear surface 45 adjacent to wear surface 33) may experience heating. The oxidation protection system disposed on non-wear surface 45 may increase temperature to a point at which the viscosity decreases and causes beading and/or migration of the oxidation protection system layers proximate edges 41, 43 away from edges 41, 43 and the adjacent wear surfaces (e.g., wear surface 33). Thus, composite material on non-wear surface 45 proximate edges 41, 43 may be vulnerable to oxidation because of such migration. Because borosilicate glass has a higher viscosity (a working point of about 1160°C (2120°F), wherein "about" means plus or minus 100°C (212°F), and the working point is the point at which a glass is sufficiently soft for the shaping of the glass) than the first pre-slurry composition and the second pre-slurry composition, the high temperatures experienced by edges 41, 43 in their proximity to wear surface 33 may cause minimal, if any, migration of the borosilicate glass layer and/or the oxidation protection system. Therefore, with the oxidation protection system comprising the borosilicate glass layer, the composite material proximate edges adjacent to a wear surface (e.g., edges 41, 43 adjacent to wear surface 33) may maintain better protection from oxidation as the borosilicate glass layer mitigates migration of the oxidation protection system.

TABLE 1 illustrates three slurries comprising oxidation protection compositions (e.g., examples of first and second slurries, described herein) prepared in accordance with various embodiments. Each numerical value in TABLE 1 is the number of grams of the particular substance added to the slurry.

TABLE 1

| Example >> | A | B | C |
|---|---|---|---|
| h-Boron nitride powder | 0 | 8.25 | 8.75 |
| Graphene nanoplatelets | 0 | 0.15 | 0.15 |
| $H_2O$ | 52.40 | 60.00 | 60.00 |
| Surfynol 465 surfactant | 0 | 0.20 | 0.20 |
| Ammonium dihydrogen phosphate (ADHP) | 11.33 | 0 | 0.50 |
| Glass frit | 34.00 | 26.5 | 26.5 |
| Aluminum orthophosphate (o-AlPO$_4$) | 2.270 | 0 | 0 |
| Acid Aluminum Phosphate (AALP) 1:2.5 | 0 | 5.0 | 5.0 |

As illustrated in TABLE 1, oxidation protection system slurries comprising a pre-slurry composition, comprising phosphate glass composition glass frit and various additives such as h-boron nitride, graphene nanoplatelets, acid aluminum phosphate, aluminum orthophosphate, a surfactant, a flow modifier such as, for example, polyvinyl alcohol, polyacrylate or similar polymer, ammonium dihydrogen phosphate, and/or ammonium hydroxide, in a carrier fluid (i.e., water) were prepared. Slurry A may be a suitable second slurry which will serve as a sealing layer after heating (such as during step 250). Slurries B and C may illustrate suitable first slurries which will form suitable base layers after heating (such as during step 230), such as the first slurry applied in step 220 of methods 200, 300, and 400. As shown in TABLE 1, slurries B and C comprise acid aluminum phosphate with an aluminum to phosphate molar ratio of 1:2.5.

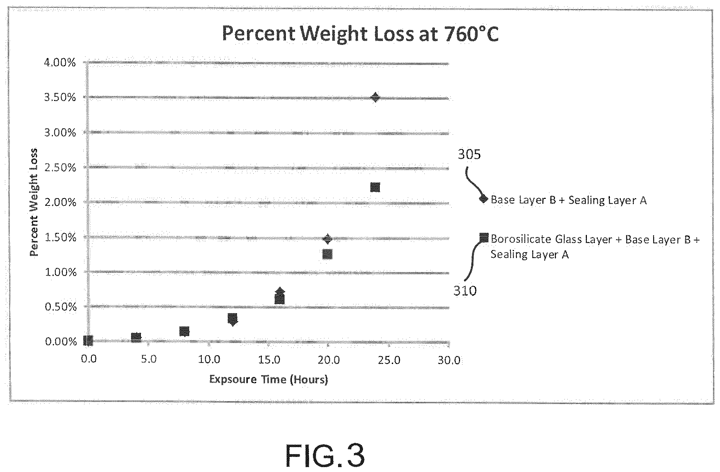

With combined reference to TABLE 1 and FIG. 3, the performance of an oxidation protection system with a borosilicate glass layer may be compared to that of an oxidation protection system without a borosilicate glass layer. Percent weight loss is shown on the y axis and exposure time is shown on the x axis of the graph depicted in FIG. 3. For preparing the oxidation protection system without a borosilicate glass layer, the performance of which is reflected by data set 305, the first slurry, slurry B, was applied to a 50-gram first carbon-carbon composite structure coupon and cured in inert atmosphere under heat at 899°C (1650°F) to form a base layer. After cooling, the second slurry, slurry A, was applied atop the cured base layer and the coupons were fired again in an inert atmosphere. For preparing the oxidation protection system comprising a borosilicate glass layer, the performance of which is reflected by data set 310, the borosilicate glass slurry was applied to a 50-gram second carbon-carbon composite structure coupon and cured in an inert atmosphere under heat at 1038°C (1900°F) to form the borosilicate glass layer. The borosilicate glass in the borosilicate glass slurry comprised 80.6% $SiO_2$, 12.6% $B_2O_3$, 4.2% $Na_2O$, 2.2% $Al_2O_3$, 0.1% CaO, 0.1% Cl, 0.05% MgO, and 0.04% $Fe_2O_3$ (percentages by weight). The borosilicate glass slurry comprised 40% by weight borosilicate glass, and 60% by weight water. The first slurry, slurry B, was applied atop the borosilicate glass layer and cured in an inert atmosphere under heat at 899°C (1650°F) to form a base layer. After cooling, the second slurry, slurry A, was applied atop the cured base layer and the coupons were fired again in an inert atmosphere. After cooling, the coupons were subjected to isothermal oxidation testing a 760°C (1400°F) over a period of hours while monitoring mass loss.

As can be seen in FIG. 3, the oxidation protection system comprising the borosilicate glass layer reflected by data set 310 resulted in less weight loss of the composite structure, therefore indicating that the oxidation protection system comprising the borosilicate glass layer may be more effective at oxidation protection than an oxidation protection system without a borosilicate glass layer. Additionally, the presence of a borosilicate glass layer may have the migration mitigation benefits as discussed herein.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

**Claims**

1. A method for forming an oxidation protection system on a carbon-carbon composite structure, comprising:

   forming (212) a borosilicate glass slurry by combining a borosilicate glass with a carrier fluid;
   applying (212) the borosilicate glass slurry to the composite structure;
   heating the composite structure to a temperature sufficient to form a borosilicate glass layer on the composite structure;
   forming (210) a first slurry by combining a first pre-slurry composition with a first carrier fluid, wherein the first pre-slurry composition comprises a first phosphate glass composition;
   applying (220) the first slurry to the composite structure;

heating (230) the composite structure to a temperature sufficient to form a base layer on the composite structure, wherein the oxidation protection system comprises the borosilicate glass layer and the base layer.

2. The method of claim 1, wherein the applying (212) the borosilicate glass slurry and the heating (212) the composite structure to form the borosilicate glass layer occurs before the applying the first slurry and the heating (230) the composite structure to form the base layer.

3. The method of claim 1 or 2, wherein the applying (220) the first slurry and the heating the composite structure (230) to form the base layer occurs before the applying the borosilicate glass slurry and the heating the composite structure to form the borosilicate glass layer.

4. The method of claim 1, 2 or 3, further comprising:

forming (240) a second slurry by combining a second pre-slurry composition with a second carrier fluid, wherein the second pre-slurry composition comprises a second phosphate glass composition;
applying the second slurry to the composite structure;
heating (250) the composite structure to a temperature sufficient to form a sealing layer on the composite structure,
wherein the oxidation protection system comprises the borosilicate glass layer, the base layer, and the sealing layer.

5. The method of claim 4, wherein the applying (212) the borosilicate glass slurry and the heating the composite structure to form the borosilicate glass layer occurs before the applying the first slurry, the heating the composite structure to form the base layer, the applying the second slurry, and the heating the composite structure to form the sealing layer, or
wherein the applying the first slurry (220) and the heating the composite structure to form the base layer occurs before the applying the borosilicate glass slurry, the heating the composite structure to form the borosilicate glass layer, the applying the second slurry, and the heating the composite structure to form the sealing layer.

6. The method of any preceding claim, wherein the first pre-slurry composition comprises a first acid aluminum phosphate wherein a first molar ratio of aluminum to phosphate is between 1 to 2 and 1 to 3, and preferably wherein the first molar ratio of aluminum to phosphate in the first acid aluminum phosphate is between 1 to 2 and 1 to 2.7.

7. The method of any of claims 4 to 6, further comprising applying a pretreating composition, wherein the applying comprises:

applying (215) a first pretreating composition to an outer surface of the composite structure before the applying the borosilicate glass slurry, the applying the first slurry, and the applying the second slurry, wherein the first pretreating composition comprises aluminum oxide and water;
heating the pretreating composition; and
applying a second pretreating composition comprising at least one of a phosphoric acid or an acid phosphate salt, and an aluminum salt on the first pretreating composition, wherein the composite structure is porous and the second pretreating composition penetrates at least a portion of a plurality of pores of the composite structure,
or
wherein the first phosphate glass composition is represented by the formula $a(A'_2O)_x(P_2O_5)_{y1}b(G_fO)_{y2}c(A''O)_z$:

A' is selected from: lithium, sodium, potassium, rubidium, cesium, and mixtures thereof;
$G_f$ is selected from: boron, silicon, sulfur, germanium, arsenic, antimony, and mixtures thereof;
A" is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;
a is a number in the range from 1 to 5;
b is a number in the range from 0 to 10;
c is a number in the range from 0 to 30;
x is a number in the range from 0.050 to 0.500;
$y_1$ is a number in the range from 0.100 to 0.950;

$y_2$ is a number in the range from 0 to 0.20; and
z is a number in the range from 0.01 to 0.5;

$$(x + y_1 + y_2 + z) = 1;$$

and

$$x < (y_1 + y_2).$$

8. The method of claim 4, wherein the second phosphate glass composition is represented by the formula $a(A'_2O)_x(P_2O_5)_{y1}b(G_fO)_{y2}c(A''O)_z$:

A' is selected from: lithium, sodium, potassium, rubidium, cesium, and mixtures thereof;
$G_f$ is selected from: boron, silicon, sulfur, germanium, arsenic, antimony, and mixtures thereof;
A'' is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;
a is a number in the range from 1 to 5;
b is a number in the range from 0 to 10;
c is a number in the range from 0 to 30;
x is a number in the range from 0.050 to 0.500;
$y_1$ is a number in the range from 0.100 to 0.950;
$y_2$ is a number in the range from 0 to 0.20; and
z is a number in the range from 0.01 to 0.5;

$$(x + y_1 + y_2 + z) = 1;$$

and

$$x < (y_1 + y_2).$$

9. The method of any preceding claim, wherein the borosilicate glass comprises silicon dioxide, boron trioxide, and aluminum oxide.

10. An oxidation protection system disposed on an outer surface of a carbon-carbon composite, comprising:

a borosilicate glass layer comprising a borosilicate glass; and
a base layer comprising a first pre-slurry composition comprising a first phosphate glass composition.

11. The oxidation protection system of claim 10, wherein the oxidation protection system further comprises a sealing layer comprising a second pre-slurry composition comprising a second phosphate glass composition.

12. The oxidation protection system of claim 11, wherein the borosilicate glass layer is disposed adjacent to the outer surface of the composite, the base layer is disposed adjacent to the borosilicate glass layer, and the sealing layer is disposed adjacent to the base layer, such that the base layer is disposed between the borosilicate glass layer and the sealing layer, or
wherein the base layer is disposed adjacent to the outer surface of the composite, the borosilicate glass layer is disposed adjacent to the base layer, and the sealing layer is disposed adjacent to the borosilicate glass layer, such that the borosilicate glass layer is disposed between the base layer and the sealing layer, or wherein at least one of the first phosphate glass composition and the second phosphate glass composition is represented by the formula $a(A'_2O)_x(P_2O_5)_{y1}b(G_fO)_{y2}c(A''O)_z$:

A' is selected from: lithium, sodium, potassium, rubidium, cesium, and mixtures thereof;

$G_f$ is selected from: boron, silicon, sulfur, germanium, arsenic, antimony, and mixtures thereof;

A" is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;

a is a number in the range from 1 to 5;

b is a number in the range from 0 to 10;

c is a number in the range from 0 to 30;

x is a number in the range from 0.050 to 0.500;

$y_1$ is a number in the range from 0.100 to 0.950;

$y_2$ is a number in the range from 0 to 0.20; and

z is a number in the range from 0.01 to 0.5;

$$(x + y_1 + y_2 + z) = 1;$$

and

$$x < (y_1 + y_2).$$

13. The oxidation protection system of any of claims 10 to 12, wherein the borosilicate glass comprises silicon dioxide, boron trioxide, and aluminum oxide.

14. The oxidation protection system of any of claims 10 to 13, wherein the first pre-slurry composition comprises a first acid aluminum phosphate wherein a first molar ratio of aluminum to phosphate is between 1 to 2 and 1 to 3.

15. A brake disk, comprising:

a carbon-carbon composite structure comprising a non-wear surface; and
an oxidation protection system disposed on the non-wear surface, the oxidation protection system comprising:

a borosilicate glass layer comprising a borosilicate glass disposed on the non-wear surface;
a base layer comprising a first pre-slurry composition comprising a first phosphate glass composition disposed on the borosilicate glass layer; and
a sealing layer comprising a second pre-slurry composition comprising a second phosphate glass composition disposed on the base layer.

**Patentansprüche**

1. Verfahren zum Bilden eines Oxidationsschutzsystems auf einer Kohlenstoff-Kohlenstoff-Verbundstoffstruktur, umfassend:

Bilden (212) einer Borsilikatglas-Aufschlämmung durch Kombinieren eines Borsilikatglases mit einem Trägerfluid;
Aufbringen (212) der Borsilikatglas-Aufschlämmung auf die Verbundstoffstruktur;
Erwärmen der Verbundstoffstruktur auf eine Temperatur, die ausreicht, um eine Borosilikatglasschicht auf der Verbundstoffstruktur zu bilden;
Bilden (210) einer ersten Aufschlämmung durch Kombinieren einer ersten Voraufschlämmungszusammensetzung mit einem ersten Trägerfluid, wobei die erste Voraufschlämmungszusammensetzung eine erste Phosphatglaszusammensetzung umfasst;
Aufbringen (220) der ersten Aufschlämmung auf die Verbundstoffstruktur;
Erwärmen (230) der Verbundstoffstruktur auf eine Temperatur, die ausreicht, um eine Basisschicht auf der Verbundstoffstruktur zu bilden,
wobei das Oxidationsschutzsystem die Borosilikatglasschicht und die Basisschicht umfasst.

2. Verfahren nach Anspruch 1, wobei das Aufbringen (212) der Borsilikatglas-Aufschlämmung und das Erwärmen (212) der Verbundstoffstruktur zum Bilden der Borsilikatglasschicht vor dem Aufbringen der ersten Aufschlämmung und dem Erwärmen (230) der Verbundstoffstruktur zum Bilden der Basisschicht erfolgt.

3. Verfahren nach Anspruch 1 oder 2, wobei das Aufbringen (220) der ersten Aufschlämmung und das Erwärmen der Verbundstoffstruktur (230) zum Bilden der Basisschicht vor dem Aufbringen der Borsilikatglas-Aufschlämmung und dem Erwärmen der Verbundstoffstruktur zum Bilden der Borosilikatglasschicht erfolgt.

4. Verfahren nach Anspruch 1, 2 oder 3, ferner umfassend:

das Bilden (240) einer zweiten Aufschlämmung durch Kombinieren einer zweiten Voraufschlämmungszusammensetzung mit einem zweiten Trägerfluid, wobei die zweite Voraufschlämmungszusammensetzung eine zweite Phosphatglaszusammensetzung umfasst;
Aufbringen der zweiten Aufschlämmung auf die Verbundstoffstruktur;
Erwärmen (250) der Verbundstoffstruktur auf eine Temperatur, die ausreicht, um eine Versiegelungsschicht auf der Verbundstoffstruktur zu bilden,
wobei das Oxidationsschutzsystem die Borosilikatglasschicht, die Basisschicht und die Versiegelungsschicht umfasst.

5. Verfahren nach Anspruch 4, wobei das Aufbringen (212) der Borosilikatglas-Aufschlämmung und das Erwärmen der Verbundstoffstruktur zum Bilden der Borosilikatglasschicht vor dem Aufbringen der ersten Aufschlämmung, dem Erwärmen der Verbundstoffstruktur zum Bilden der Basisschicht, dem Aufbringen der zweiten Aufschlämmung und Erwärmen der Verbundstoffstruktur zum Bilden der Versiegelungsschicht erfolgt, oder
wobei das Aufbringen der ersten Aufschlämmung (220) und das Erwärmen der Verbundstoffstruktur zum Bilden der Basisschicht vor dem Aufbringen der Borosilikatglas-Aufschlämmung, dem Erwärmen der Verbundstoffstruktur zum Bilden der Borosilikatglasschicht, dem Aufbringen der zweiten Aufschlämmung und dem Erwärmen der Verbundstoffstruktur zum Bilden der Versiegelungsschicht erfolgt.

6. Verfahren nach einem der vorhergehenden Ansprüche, wobei die erste Voraufschlämmungszusammensetzung ein erstes saures Aluminiumphosphat umfasst, wobei ein erstes Molverhältnis von Aluminium zu Phosphat vorzugsweise zwischen 1 zu 2 und 1 zu 3 liegt,
wobei das erste Molverhältnis von Aluminium zu Phosphat in dem ersten sauren Aluminiumphosphat zwischen 1 zu 2 und 1 zu 2,7 liegt.

7. Verfahren nach einem der Ansprüche 4 bis 6, ferner umfassend das Aufbringen einer Vorbehandlungszusammensetzung, wobei das Aufbringen umfasst:

Aufbringen (215) einer ersten Vorbehandlungszusammensetzung auf eine äußere Oberfläche der Verbundstoffstruktur vor dem Aufbringen der Borosilikatglas-Aufschlämmung, dem Aufbringen der ersten Aufschlämmung und dem Aufbringen der zweiten Aufschlämmung, wobei die erste Vorbehandlungszusammensetzung Aluminiumoxid und Wasser umfasst;
Erwärmen der Vorbehandlungszusammensetzung; und
Auftragen einer zweiten Vorbehandlungszusammensetzung, die mindestens eines von einer Phosphorsäure oder einem sauren Phosphatsalz und einem Aluminiumsalz umfasst, auf die erste Vorbehandlungszusammensetzung, wobei die Verbundstoffstruktur porös ist und die zweite Vorbehandlungszusammensetzung mindestens einen Teil einer Vielzahl von Poren der Verbundstoffstruktur, durchdringt, oder
wobei die erste Phosphatglaszusammensetzung durch die Formel $a\,(A'_2O)_x(P_2O_5)_{y1}b(G_fO)_{y2}c(A''O)_z$ dargestellt wird:

A' ausgewählt ist aus: Lithium, Natrium, Kalium, Rubidium, Cäsium und Mischungen davon;
$G_f$ ausgewählt ist aus: Bor, Silizium, Schwefel, Germanium, Arsen, Antimon und Mischungen davon;
A" ausgewählt ist aus: Vanadium, Aluminium, Zinn, Titan, Chrom, Mangan, Eisen, Kobalt, Nickel, Kupfer, Quecksilber, Zink, Thulium, Blei, Zirkonium, Lanthan, Cer, Praseodym, Neodym, Samarium, Europium, Gadolinium, Terbium, Dysprosium, Holmium, Erbium, Thulium, Ytterbium, Actinium, Thorium, Uran, Yttrium, Gallium, Magnesium, Calcium, Strontium, Barium, Zinn, Wismut, Cadmium und Mischungen davon;
a eine Zahl im Bereich von 1 bis 5 ist;
b eine Zahl im Bereich von 0 bis 10 ist;
c eine Zahl im Bereich von 0 bis 30 ist;

x eine Zahl im Bereich von 0,050 bis 0,500 ist;
$y_1$ eine Zahl im Bereich von 0,100 bis 0,950 ist;
$y_2$ eine Zahl im Bereich von 0 bis 0,20 ist; und
z eine Zahl im Bereich von 0,01 bis 0,5 ist;

$$(x + y_1 + y_2 + z) = 1;$$

und

$$x < (y_1 + y_2).$$

8. Verfahren nach Anspruch 4, wobei die zweite Phosphatglaszusammensetzung durch die Formel $a(A'_2O)_x(P_2O_5)_{y_1}b(G_fO)_{y_2}c(A''O)_z$ dargestellt wird:

A' ausgewählt ist aus: Lithium, Natrium, Kalium, Rubidium, Cäsium und Mischungen davon;
$G_f$ ausgewählt ist aus: Bor, Silizium, Schwefel, Germanium, Arsen, Antimon und Mischungen davon;
A'' ausgewählt ist aus: Vanadium, Aluminium, Zinn, Titan, Chrom, Mangan, Eisen, Kobalt, Nickel, Kupfer, Quecksilber, Zink, Thulium, Blei, Zirkonium, Lanthan, Cer, Praseodym, Neodym, Samarium, Europium, Gadolinium, Terbium, Dysprosium, Holmium, Erbium, Thulium, Ytterbium, Actinium, Thorium, Uran, Yttrium, Gallium, Magnesium, Calcium, Strontium, Barium, Zinn, Wismut, Cadmium und Mischungen davon;
a eine Zahl im Bereich von 1 bis 5 ist;
b eine Zahl im Bereich von 0 bis 10 ist;
c eine Zahl im Bereich von 0 bis 30 ist;
x eine Zahl im Bereich von 0,050 bis 0,500 ist;
$y_1$ eine Zahl im Bereich von 0,100 bis 0,950 ist;
$y_2$ eine Zahl im Bereich von 0 bis 0,20 ist; und
z eine Zahl im Bereich von 0,01 bis 0,5 ist;

$$(x + y_1 + y_2 + z) = 1;$$

und

$$x < (y_1 + y_2).$$

9. Verfahren nach einem der vorhergehenden Ansprüche, wobei das Borosilikatglas Siliziumdioxid, Bortrioxid und Aluminiumoxid umfasst.

10. Oxidationsschutzsystem, das auf einer äußeren Oberfläche eines Kohlenstoff-Kohlenstoff-Verbundwerkstoffs angeordnet ist, umfassend:

eine Borsilikatglasschicht, die ein Borsilikatglas umfasst; und
eine Basisschicht, die eine erste Voraufschlämmungszusammensetzung umfasst, die eine erste Phosphatglaszusammensetzung umfasst.

11. Oxidationsschutzsystem nach Anspruch 10, wobei das Oxidationsschutzsystem ferner eine Versiegelungsschicht umfasst, die eine zweite Voraufschlämmungszusammensetzung umfasst, die eine zweite Phosphatglaszusammensetzung umfasst.

12. Oxidationsschutzsystem nach Anspruch 11, wobei die Borsilikatglasschicht angrenzend an die äußere Oberfläche des Verbundstoffs angeordnet ist, die Basisschicht angrenzend an die Borsilikatglasschicht angeordnet ist und die Versiegelungsschicht angrenzend an die Basisschicht angeordnet ist, so dass die Basisschicht zwischen der Borsilikatglasschicht und der Versiegelungsschicht angeordnet ist, oder wobei die Basisschicht angrenzend an die äußere Oberfläche des Verbundstoffs angeordnet ist, die Borsilikatglasschicht angrenzend an die Basisschicht angeordnet ist und die Versiegelungsschicht angrenzend an die Borosilikatglasschicht angeordnet ist, so dass die Borosilikatglasschicht zwischen der Basisschicht und der Versiegelungsschicht angeordnet ist, oder wobei mindestens eine der ersten Phosphatglaszusammensetzung und der zweiten Phosphatglaszusammensetzung durch die Formel $a(A'_2O)_x(P_2O_5)_{y1}b(G_fO)_{y2}c(A"O)_z$ dar gestellt wird:

A' ausgewählt ist aus: Lithium, Natrium, Kalium, Rubidium, Cäsium und Mischungen davon;

$G_f$ ausgewählt ist aus: Bor, Silizium, Schwefel, Germanium, Arsen, Antimon und Mischungen davon;

A" ausgewählt ist aus: Vanadium, Aluminium, Zinn, Titan, Chrom, Mangan, Eisen, Kobalt, Nickel, Kupfer, Quecksilber, Zink, Thulium, Blei, Zirkonium, Lanthan, Cer, Praseodym, Neodym, Samarium, Europium, Gadolinium, Terbium, Dysprosium, Holmium, Erbium, Thulium, Ytterbium, Actinium, Thorium, Uran, Yttrium, Gallium, Magnesium, Calcium, Strontium, Barium, Zinn, Wismut, Cadmium und Mischungen davon;

a eine Zahl im Bereich von 1 bis 5 ist;

b eine Zahl im Bereich von 0 bis 10 ist;

c eine Zahl im Bereich von 0 bis 30 ist;

x eine Zahl im Bereich von 0,050 bis 0,500 ist;

$y_1$ eine Zahl im Bereich von 0,100 bis 0,950 ist;

$y_2$ eine Zahl im Bereich von 0 bis 0,20 ist; und

z eine Zahl im Bereich von 0,01 bis 0,5 ist;

$$(x + y_1 + y_2 + z) = 1;$$

und

$$x < (y_1 + y_2).$$

13. Oxidationsschutzsystem nach einem der Ansprüche 10 bis 12, wobei das Borosilikatglas Siliziumdioxid, Bortrioxid und Aluminiumoxid umfasst.

14. Oxidationsschutzsystem nach einem der Ansprüche 10 bis 13, wobei die erste Voraufschlämmungszusammensetzung ein erstes saures Aluminiumphosphat umfasst, wobei ein erstes Molverhältnis von Aluminium zu Phosphat zwischen 1 zu 2 und 1 zu 3 liegt.

15. Bremsscheibe, umfassend:

eine Kohlenstoff-Kohlenstoff-Verbundstoffstruktur, die eine verschleißfeste Oberfläche umfasst; und

ein Oxidationsschutzsystem, das auf der verschleißfesten Oberfläche angeordnet ist, das Oxidationsschutzsystem umfassend:

eine Borosilikatglasschicht, die ein Borsilikatglas umfasst, das auf der verschleißfesten Oberfläche angeordnet ist;

eine Basisschicht, die eine erste Voraufschlämmungszusammensetzung umfasst, die eine erste Phosphatglaszusammensetzung umfasst, die auf der Borsilikatglasschicht angeordnet ist; und

eine Versiegelungsschicht, die eine zweite Voraufschlämmungszusammensetzung umfasst, die eine zweite Phosphatglaszusammensetzung umfasst, die auf der Basisschicht angeordnet ist.

**Revendications**

1. Procédé de formation d'un système de protection contre l'oxydation sur une structure composite carbone-carbone, comprenant :

la formation (212) d'une suspension de verre borosilicate en combinant du verre borosilicate avec un fluide porteur ;

l'application (212) de la suspension de verre borosilicate sur la structure composite ;

le chauffage de la structure composite à une température suffisante pour former une couche de verre borosilicate sur la structure composite ;

la formation (210) d'une première suspension en combinant une première composition de pré-suspension avec un premier fluide porteur, dans lequel la première composition de pré-suspension comprend une première composition de verre de phosphate ;

l'application (220) de la première suspension sur la structure composite ;

le chauffage (230) de la structure composite à une température suffisante pour former une couche de base sur la structure composite,

dans lequel le système de protection contre l'oxydation comprend la couche de verre borosilicate et la couche de base.

2.   Procédé selon la revendication 1, dans lequel l'application (212) de la suspension de verre borosilicate et le chauffage (212) de la structure composite pour former la couche de verre borosilicate ont lieu avant l'application de la première suspension et le chauffage (230) de la structure composite pour former la couche de base.

3.   Procédé selon la revendication 1 ou 2, dans lequel l'application (220) de la première suspension et le chauffage de la structure composite (230) pour former la couche de base ont lieu avant l'application de la suspension de verre borosilicate et le chauffage de la structure composite pour former la couche de verre borosilicate.

4.   Procédé selon la revendication 1, 2 ou 3, comprenant en outre :

la formation (240) d'une seconde suspension en combinant une seconde composition de pré-suspension avec un second fluide porteur, dans lequel la seconde composition de pré-suspension comprend une seconde composition de verre de phosphate ;

l'application de la seconde suspension sur la structure composite ;

le chauffage (250) de la structure composite à une température suffisante pour former une couche d'étanchéité sur la structure composite,

dans lequel le système de protection contre l'oxydation comprend la couche de verre borosilicate, la couche de base et la couche d'étanchéité.

5.   Procédé selon la revendication 4, dans lequel l'application (212) de la suspension de verre borosilicate et le chauffage de la structure composite pour former la couche de verre borosilicate ont lieu avant l'application de la première suspension, le chauffage de la structure composite pour former la couche de base, l'application de la seconde suspension, et le chauffage de la structure composite pour former la couche d'étanchéité, ou

dans lequel l'application de la première suspension (220) et le chauffage de la structure composite pour former la couche de base ont lieu avant l'application de la suspension de verre borosilicate, le chauffage de la structure composite pour former la couche de verre borosilicate, l'application de la seconde suspension, et le chauffage de la structure composite pour former la couche d'étanchéité.

6.   Procédé selon une quelconque revendication précédente, dans lequel la première composition de pré-suspension comprend un premier phosphate d'aluminium acide dans lequel un premier rapport molaire de l'aluminium au phosphate est compris entre 1 et 2 et 1 et 3, et de préférence dans lequel le premier rapport molaire de l'aluminium au phosphate dans le premier phosphate d'aluminium acide est compris entre 1 et 2 et 1 et 2,7.

7.   Procédé selon l'une quelconque des revendications 4 à 6, comprenant en outre l'application d'une composition de prétraitement, dans lequel l'application comprend :

l'application (215) d'une première composition de prétraitement sur une surface extérieure de la structure composite avant l'application de la suspension de verre borosilicate, l'application de la première suspension et l'application de la seconde suspension, dans lequel la première composition de prétraitement comprend de l'oxyde d'aluminium et de l'eau ;

le chauffage de la composition de prétraitement ; et

l'application d'une seconde composition de prétraitement comprenant au moins l'un parmi un acide phosphorique ou un sel de phosphate acide, et un sel d'aluminium sur la première composition de prétraitement, dans lequel la structure composite est poreuse et la seconde composition de prétraitement pénètre dans au moins une partie d'une pluralité de pores de la structure composite, ou

dans lequel la première composition de verre de phosphate est représentée par la formule a $(A'_2O)_x(P_2O_5)_{y1}b(G_fO)_{y2}c(A''O)_z$ :

A' est choisi parmi : le lithium, le sodium, le potassium, le rubidium, le césium, et leurs mélanges ;

$G_f$ est choisi parmi : le bore, le silicium, le soufre, le germanium, l'arsenic, l'antimoine et leurs mélanges ;

A" est choisi parmi : le vanadium, l'aluminium, l'étain, le titane, le chrome, le manganèse, le fer, le cobalt, le nickel, le cuivre, le mercure, le zinc, le thulium, le plomb, le zirconium, le lanthane, le cérium, le praséodyme, le néodyme, le samarium, l'europium, le gadolinium, le terbium, le dysprosium, l'holmium, l'erbium, le thulium, l'ytterbium, l'actinium, le thorium, l'uranium, l'yttrium, le gallium, le magnésium, le calcium, le strontium, le baryum, l'étain, le bismuth, le cadmium et leurs mélanges ;

a est un nombre compris dans la plage allant de 1 à 5 ;

b est un nombre compris dans la plage allant de 0 à 10 ;

c est un nombre compris dans la plage allant de 0 à 30 ;

x est un nombre compris dans la plage allant de 0,050 à 0,500 ;

$y_1$ est un nombre compris dans la plage allant de 0,100 à 0,950 ;

$y_2$ est un nombre compris dans la plage allant de 0 à 0,20 ; et

z est un nombre compris dans la plage allant de 0,01 à 0,5 ;

$$(X + y_1 + y_2 + z) = 1 \; ;$$

et

$$X < (y_1 + y_2).$$

8. Procédé selon la revendication 4, dans lequel la seconde composition de verre de phosphate est représentée par la formule a $(A'_2O)_x(P_2O_5)_{y1}b(G_fO)_{y2}c(A"O)_z$ :

A' est choisi parmi : le lithium, le sodium, le potassium, le rubidium, le césium, et leurs mélanges ;

$G_f$ est choisi parmi : le bore, le silicium, le soufre, le germanium, l'arsenic, l'antimoine et leurs mélanges ;

A" est choisi parmi : le vanadium, l'aluminium, l'étain, le titane, le chrome, le manganèse, le fer, le cobalt, le nickel, le cuivre, le mercure, le zinc, le thulium, le plomb, le zirconium, le lanthane, le cérium, le praséodyme, le néodyme, le samarium, l'europium, le gadolinium, le terbium, le dysprosium, l'holmium, l'erbium, le thulium, l'ytterbium, l'actinium, le thorium, l'uranium, l'yttrium, le gallium, le magnésium, le calcium, le strontium, le baryum, l'étain, le bismuth, le cadmium et leurs mélanges ;

a est un nombre compris dans la plage allant de 1 à 5 ;

b est un nombre compris dans la plage allant de 0 à 10 ;

c est un nombre compris dans la plage allant de 0 à 30 ;

x est un nombre compris dans la plage allant de 0,050 à 0,500 ;

$y_1$ est un nombre compris dans la plage allant de 0,100 à 0,950 ;

$y_2$ est un nombre compris dans la plage allant de 0 à 0,20 ; et

z est un nombre compris dans la plage allant de 0,01 à 0,5 ;

$$(X + y_1 + y_2 + z) = 1 \; ;$$

et

$$X < (y_1 + y_2).$$

9. Procédé selon une quelconque revendication précédente, dans lequel le verre borosilicate comprend du dioxyde de silicium, du trioxyde de bore et de l'oxyde d'aluminium.

10. Système de protection contre l'oxydation disposé sur une surface extérieure d'un composite carbone-carbone, comprenant :

une couche de verre borosilicate comprenant du verre borosilicate ; et
une couche de base comprenant une première composition de pré-suspension comprenant une première composition de verre de phosphate.

**11.** Système de protection contre l'oxydation selon la revendication 10, dans lequel le système de protection contre l'oxydation comprend en outre une couche d'étanchéité comprenant une seconde composition de pré-suspension comprenant une seconde composition de verre de phosphate.

**12.** Système de protection contre l'oxydation selon la revendication 11, dans lequel la couche de verre borosilicate est disposée adjacente à la surface extérieure du composite, la couche de base est disposée adjacente à la couche de verre borosilicate et la couche d'étanchéité est disposée adjacente à la couche de base, de sorte que la couche de base soit disposée entre la couche de verre borosilicate et la couche d'étanchéité, ou

dans lequel la couche de base est disposée adjacente à la surface extérieure du composite, la couche de verre borosilicate est disposée adjacente à la couche de base, et la couche d'étanchéité est disposée adjacente à la couche de verre borosilicate, de sorte que la couche de verre borosilicate soit disposée entre la couche de base et la couche d'étanchéité, ou dans lequel au moins l'une parmi la première composition de verre de phosphate et la seconde composition de verre de phosphate est représentée par la formule a $(A'_2O)_x(P_2O_5)_{y1}b(G_fO)_{y2}c(A"O)_z$ :

A' est choisi parmi : le lithium, le sodium, le potassium, le rubidium, le césium, et leurs mélanges ;
$G_f$ est choisi parmi : le bore, le silicium, le soufre, le germanium, l'arsenic, l'antimoine et leurs mélanges ;
A" est choisi parmi : le vanadium, l'aluminium, l'étain, le titane, le chrome, le manganèse, le fer, le cobalt, le nickel, le cuivre, le mercure, le zinc, le thulium, le plomb, le zirconium, le lanthane, le cérium, le praséodyme, le néodyme, le samarium, l'europium, le gadolinium, le terbium, le dysprosium, l'holmium, l'erbium, le thulium, l'ytterbium, l'actinium, le thorium, l'uranium, l'yttrium, le gallium, le magnésium, le calcium, le strontium, le baryum, l'étain, le bismuth, le cadmium et leurs mélanges ;
a est un nombre compris dans la plage allant de 1 à 5 ;
b est un nombre compris dans la plage allant de 0 à 10 ;
c est un nombre compris dans la plage allant de 0 à 30 ;
x est un nombre compris dans la plage allant de 0,050 à 0,500 ;
$y_1$ est un nombre compris dans la plage allant de 0,100 à 0,950 ;
$y_2$ est un nombre compris dans la plage allant de 0 à 0,20 ; et
z est un nombre compris dans la plage allant de 0,01 à 0,5 ;

$$(X + y_1 + y_2 + z) = 1 ;$$

et

$$X < (y_1 + y_2).$$

**13.** Système de protection contre l'oxydation selon l'une quelconque des revendications 10 à 12, dans lequel le verre borosilicate comprend du dioxyde de silicium, du trioxyde de bore et de l'oxyde d'aluminium.

**14.** Système de protection contre l'oxydation selon l'une quelconque des revendications 10 à 13, dans lequel la première composition de pré-suspension comprend un premier phosphate d'aluminium acide dans lequel un premier rapport molaire de l'aluminium au phosphate est compris entre 1 et 2 et 1 et 3.

**15.** Disque de frein, comprenant :

une structure composite carbone-carbone comprenant une surface anti-usure ; et
un système de protection contre l'oxydation disposé sur la surface anti-usure, le système de protection contre l'oxydation comprenant :

une couche de verre borosilicate comprenant du verre borosilicate disposée sur la surface anti-usure ;
une couche de base comprenant une première composition de pré-suspension comprenant une première composition de verre de phosphate disposée sur la couche de verre borosilicate ; et
une couche d'étanchéité comprenant une seconde composition de pré-suspension comprenant une seconde composition de verre de phosphate disposée sur la couche de base.

FIG.1A

FIG.1B

200

| Form a first slurry | 210 |

↓

| Apply the first slurry to the composite structure | 220 |

↓

| Heat the composite structure to form a base layer | 230 |

# FIG. 2A

300

```
┌─────────────────────────────┐
│ Apply a pretreating composition to │ ⟋ 215
│       composite structure    │
└─────────────────────────────┘
              │
              ▼
┌─────────────────────────────┐
│      Form a First Slurry     │ ⟋ 210
└─────────────────────────────┘
              │
              ▼
┌─────────────────────────────┐
│    Apply the first slurry to the │ ⟋ 220
│       composite structure    │
└─────────────────────────────┘
              │
              ▼
┌─────────────────────────────┐
│  Heat the composite structure to │ ⟋ 230
│        form a base layer     │
└─────────────────────────────┘
```

FIG. 2B

400

```
┌─────────────────────────────────┐
│  Apply a pretreating composition to  │──── 215
│       composite structure       │
└─────────────────────────────────┘
              │
              ▼
┌─────────────────────────────────┐
│  Apply borosilicate glass slurry to  │──── 212
│       composite structure       │
└─────────────────────────────────┘
              │
              ▼
┌─────────────────────────────────┐
│          Form a first slurry          │──── 210
└─────────────────────────────────┘
              │
              ▼
┌─────────────────────────────────┐
│      Apply the first slurry to the      │──── 220
│       composite structure       │
└─────────────────────────────────┘
              │
              ▼
┌─────────────────────────────────┐
│   Heat the composite structure to    │──── 230
│          form a base layer          │
└─────────────────────────────────┘
              │
              ▼
┌─────────────────────────────────┐
│  Form a second slurry and apply to  │──── 240
│           the base layer           │
└─────────────────────────────────┘
              │
              ▼
┌─────────────────────────────────┐
│   Heat the composite structure to    │──── 250
│  form a sealing layer over the base  │
│              layer              │
└─────────────────────────────────┘
```

# FIG. 2C

FIG.3

**EP 3 521 265 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170369714 A1